# EUROPÄISCHE PATENTSCHRIFT

(11) **EP 3 359 778 B1**
(45) Veröffentlichungstag und Bekanntmachung des Hinweises auf die Patenterteilung: **13.03.2019**
(21) Anmeldenummer: 16798076.2
(22) Anmeldetag: 13.10.2016
(51) Int. Cl.: F02B 29/04, F02B 33/06, F01B 3/00, F02G 1/02, F02G 3/02, F02B 75/26, F01B 3/04

(54) **AXIALKOLBENMOTOR UND VERFAHREN ZUM BETRIEB EINES AXIALKOLBENMOTORS**
AXIAL PISTON MOTOR AND METHOD FOR OPERATING AN AXIAL PISTON MOTOR
MOTEUR À PISTONS AXIAUX, PROCÉDÉ DE FONCTIONNEMENT D'UN MOTEUR À PISTONS AXIAUX

(30) Priorität: 26.10.2015 DE 102015118239
(43) Veröffentlichungstag der Anmeldung: 15.08.2018
(73) Patentinhaber: GETAS Gesellschaft für thermodynamische Antriebssysteme mbH, 52351 Düren (DE)
(72) Erfinder: ROHS, Ulrich, 52351 Düren (DE); VOIGT, Dieter, 52074 Aachen (DE)
(74) Vertreter: Reuther, Martin
(86) Internationale Anmeldenummer: PCT/DE2016/100479
(87) Internationale Veröffentlichungsnummer: WO 2017/071680

(56) Entgegenhaltungen:
- EP-A2- 2 456 956
- EP-A2- 2 711 500
- US-A- 3 893 295
- US-A1- 2012 118 250
- US-B1- 9 003 765

## Beschreibung

Die Erfindung betrifft einen Axialkolbenmotor mit innerer kontinuierlicher Verbrennung mit einer kontinuierlich arbeitenden Brennkammer, mit wenigstens zwei Arbeitszylindern und mit wenigstens zwei von den Arbeitszylindern angetriebenen Verdichterzylindern, wobei Schussverbindungen zwischen der kontinuierlich arbeitenden Brennkammer und den Arbeitszylindern zyklisch schließ- und öffenbar sind und wobei zwischen den Verdichterzylindern und der Brennkammer eine Brennmediumzuleitung zur Zufuhr vom verdichteten Brennmedium zu der kontinuierlich arbeitenden Brennkammer vorgesehen ist. Ebenso betrifft die Erfindung ein Verfahren zum Betrieb eines Axialkolbenmotors mit innerer kontinuierlicher Verbrennung, bei welchem verdichtetes Brennmedium gemeinsam mit Kraftstoff in einer kontinuierlich arbeitenden Brennkammer zu Arbeitsmedium verbrannt, das Arbeitsmedium zum gewinnen mechanischer Energie zyklisch Arbeitszylindern zugeführt und die in den Arbeitszylindern gewonnene mechanische Energie auch für ein verdichtendes Brennmedium genutzt wird.

Motoren von gänzlich anderer Natur sind in der DE 691 12 142 T2, der US 4,783,966 oder der US 5,964,087 offenbart, bei denen eine diskontinuierliche Verbrennung vorliegt, wobei hierzu jeweils Luft oder ein Luft-Kraftstoff-Gemisch-verdichtet, die verdichtete Luft oder das Luft-Kraftstoff-Gemisch dann stoßweise einer Brennkammer oder einem Arbeitszylinder zugeführt, wobei im Fall von verdichteter Luft dann der verdichteten Luft noch Kraftstoff zugegeben wird, und anschließend das verdichtete Luft-Kraftstoff-Gemisch gezündet und zur Gänze einem Arbeitszylinder zugeführt wird. Der Verbrennungsvorgang endet dann und wird erst wieder initialisiert, wenn erneut verdichtete Luft zur Verfügung gestellt wird. Dieses bedingt, das der gesamte Verbrennungsprozess wesentlich durch den Begin und das Ende des jeweiligen Verbrennungsvorgangs bestimmt wird. Auch wird das Verdichtungs-Expansions-Verhältnis maßgeblich durch die Verhältnisse der Zylinderdurchmesser bzw. der Hubvolumina bei der Verdichtung und der Expansion bestimmt.

Beispielsweise als Kolbenmotoren sind Motoren mit innerer kontinuierlicher Verbrennung aus der US 972,504 bereits hinlänglich bekannt. Auch sind Axialkolbenmotoren beispielsweise in der US 5,228,415 oder in der DE 31 35 619 A1 beschrieben, wobei für diesen Motorentyp die innere kontinuierliche Verbrennung an sich nicht offenbart ist. Auch die EP 1 035 310 A2 und die WO 2011/009454 A2 offenbaren Axialkolbenmotoren mit innerer kontinuierlicher Verbrennung, wobei die Axialkolbenmotoren der letztere beiden jeweils eine kontinuierlich arbeitende Brennkammer, wenigstens zwei Arbeitszylinder und wenigstens zwei von den Arbeitszylindern angetriebene Verdichterzylinder aufweisen, wobei Schussverbindungen zwischen der kontinuierlich arbeitenden Brennkammer und den Arbeitszylindern zyklisch schließt- und öffenbar sind und wobei zwischen den Verdichterzylindern und der Brennkammer eine Brennmediumzuleitung zur Zufuhr von verdichteten Brennmedium zu der kontinuierlich arbeitenden Brennkammer vorgesehen ist. Ebenso offenbaren letztere beiden Druckschriften ein Verfahren zum Betrieb eines Axialkolbenmotors mit innerer kontinuierlicher Verbrennung, bei welchem verdichtetes Brennmedium gemeinsam mit Kraftstoff in einer kontinuierlich arbeitenden Brennkammer zu Arbeitsmedium verbrannt, das Arbeitsmedium zum Gewinnen mechanischer Energie zyklisch Arbeitszylindern zugeführt und die in den Arbeitszylindern gewonnene mechanische Energie auch für ein Verdichten des Brennmediums genutzt wird. Hierbei setzt die EP 1 035 310 A2 zum zyklischen Öffnen und Schließen der Schussverbindungen auf Hülsen, welche jeweils um die Arbeitszylinder herum angeordnet sind und um diese drehen, wobei Öffnungen in diesen Hülsen dann zum Öffnen bzw. Schließen der Schussverbindungen genutzt werden. Entsprechend der WO 2011/009454 A2 können statt dieser Hülsen auch Steuerkolben zur Anwendung kommen, welche entsprechend zyklisch die Schussverbindungen öffnen bzw. schließen. Darüber hinaus offenbart letztere Druckschrift, dass das Arbeitsmedium während der Expansion in dem Arbeitszylinder mit einem größeren Druckverhältnis als ein während der Verdichtung in dem Verdichtungszylinder vorliegendes Druckverhältnis expandiert werden soll. Darüber hinaus ist beiden Axialkolbenmotoren dieser beiden Druckschriften gemein, dass das verdichtete Brennmedium aus den Verdichterzylinder kommend zunächst in einer Art Sammelrohr gesammelt und dann hieraus das verdichtete Brennmedium über eine Brennmediumzuleitung, welche durch einen oder mehrere Wärmetauscher läuft, der kontinuierlich arbeitenden Brennkammer zugeführt wird.

Es ist Aufgabe vorliegender Erfindung, den Wirkungsgrad bei gattungsgemäßen Axialkolbenmotoren bzw. Verfahren zum Betrieb von Axialkolbenmotoren zu verbessern.

Die Aufgabe der Erfindung wird durch Axialkolbenmotoren bzw. durch Verfahren zum Betrieb von Axialkolbenmotoren mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

Bei einem Axialkolbenmotor mit innerer kontinuierlicher Verbrennung mit einer kontinuierlich arbeitenden Brennkammer, mit wenigstens zwei Arbeitszylindern und mit wenigstens zwei von den Arbeitszylindern angetriebenen Verdichterzylindern, wobei Schussverbindungen zwischen der kontinuierlich arbeitenden Brennkammer und den Arbeitszylindern zyklisch schließ- und öffenbar sind und wobei zwischen den Verdichterzylindern und der Brennkammer eine Brennmediumzuleitung zur Zufuhr von verdichtetem Brennmedium zu der kontinuierlich arbeiteten Brennkammer vorgesehen ist, lässt sich der Wirkungsgrad verbessern, wenn ein Auslass eines ersten Verdichterszylinders der beiden Verdichterzylinder mit einem Einlass eines zweiten Verdichterszylinders der beiden Verdichterzylinder verbunden ist.

Auch lässt sich der Wirkungsgrad bei einem Verfahren zum Betrieb eines Axialkolbenmotors mit innerer kontinuierlicher Verbrennung, bei welchem verdichtetes Brennmedium gemeinsam mit Kraftstoff in einer kontinuierlich arbeitenden Brennkammer zu Arbeitsmedium verbrannt, das Arbeitsmedium zum Gewinnen mechanischer Energie zyklisch Arbeitszylindern zugeführt und die den Arbeitszylindern gewonnene mechanische Energie auch für ein Verdichten des Brennmediums genutzt wird, verbessern, wenn das Verdichten in zwei Stufen erfolgt.

Durch die Zweistufigkeit bzw. dadurch, dass ein Auslass eines ersten Verdichterzylinders mit einem Einlass eines zweiten Verdichterzylinders verbunden ist, brauchen entgegen der Lösung nach dem Stand der Technik nicht zu große Verdichtungen in einem Schritt durchgeführt werden, was an sich an eine Ventilsteuerung und an die Ausgestaltung der Verdichterzylinder sowie an den Hub der Verdichterkolben sehr hohe Anforderungen stellt. Bei der zweistufigen Lösungen bzw. bei der Verbindung des Auslasses des ersten Verdichterzylinders und des Einlasses des zweiten Verdichterzylinders fällt, obgleich letztlich die Ansteuerung der Verdichterzylinder bzw. deren Auslässe und Einlässe wesentlich komplexer ist, überraschenderweise der Wirkungsgrad höher aus.

Bei einem Verfahren zum Betrieb eines Axialkolbenmotors mit innerer kontinuierlicher Verbrennung, bei welchem verdichtetes Brennmedium gemeinsam mit Kraftstoff in einer kontinuierlich arbeitenden Brennkammer zu Arbeitsmedium verbrannt, das Arbeitsmedium zum Gewinnen mechanischer Energie zyklisch Arbeitszylindern zugeführt und die in den Arbeitszylindern gewonnene mechanische Energie auch für ein Verdichten des Brennmediums genutzt wird, lässt sich der Wirkungsgrad auch dadurch verbessern, dass das Verdichten bei Verdichtungsendtemperaturen unter 300 °C erfolgt. Die niedrige Verdichtungsendtemperatur ermöglicht eine Annäherung des Verdichtungsvorgangs an eine isotherme Verdichtung, was eine entsprechende Steigerung des Wirkungsgrades bedingt.

Eine entsprechend niedrige Temperatur bei der Verdichtung erscheint angesichts etwaiger Wärmetauscher, mit denen das verdichtete Brennmedium vor dem Eintritt in die kontinuierlich arbeitende Brennkammer erwärmt wird, an sich widersinnig. Es hat sich jedoch als vom Wirkungsgrad vorteilhaft erwiesen, möglichst isotherm und bei niedrigen Temperaturen zu verdichten, und dann erst die Wärme über Wärmetauscher zuzuführen.

Hierbei versteht es sich, dass durch die Zweistufigkeit der Verdichtung, wie sie vorstehend erläutert ist bzw. durch die Verbindung des Auslasses des ersten Verdichtungszylinders mit dem Einlass des zweiten Verdichterzylinders eine Kontrolle der Temperatur wesentlich einfacher erfolgen kann. Dieses gilt insbesondere aus dem Grund, da wegen der Zweistufigkeit kleinere Hübe und ggf. auch kleinere Verdichterzylinder zur Anwendung kommen können. Auch kann kumulativ bzw. alternativ hierzu zwischen den beiden Stufen eine Zwischenkühlung erfolgen, sodass ebenso eine entsprechend niedrige Verdichtungsendtemperatur gewährleistet werden kann. Zur Zwischenkühlung kann zwischen dem Auslass des ersten Verdichterzylinders und dem Einlass des zweiten Verdichterzylinders beispielsweise ein Zwischenkühler vorgesehen sein, der sich durch entsprechende Kühleinrichtungen, wie Kühlrippen, Kühlschlangen, eine Wasserkühlung bzw. eine gezielte Luftkühlung, auszeichnet. Gegebenenfalls kann ein derartiger Zwischenkühler auch als Zwischenspeicher genutzt werden, wobei dann der Zwischenspeicher entsprechend mit Kühleinrichtungen zu versehen ist.

Insbesondere in Abkehr von der WO 2011/009454 A2, bei welcher davon ausgegangen wird, dass ein Brennmedium während der Expansion in der Expanderstufe bzw. in den Arbeitszylindern mit einem größerem Druckverhältnis als ein während der Verdichtung in der Verdichterstufe, also in den Verdichterzylindern, vorliegendem Druckverhältnis expandiert werden soll bzw. dass die Verdichterstufe ein von der Expanderstufe kleineres Hubvolumen ausweisen soll, hat sich herausgestellt, dass der Wirkungsgrad des Axialkolbenmotors und insbesondere auch das Verdichtungsverhältnis insbesondere durch die Ansteuerung der Schussverbindungen optimiert werden kann, wobei sich überraschenderweise der Wirkungsgrad bei einem Axialkolbenmotor mit innerer kontinuierlicher Verbrennung mit einer kontinuierlich arbeitenden Brennkammer, mit wenigstens zwei Arbeitszylindern und mit wenigstens zwei von den Arbeitszylindern angetriebenen Verdichtungszylindern, wobei Schussverbindungen zwischen der kontinuierlich arbeitenden Brennkammern und den Arbeitszylindern zyklisch schließ- und öffenbar sind und wobei zwischen den Verdichterzylindern und der Brennkammer eine Brennmediumzuleitung zur Zufuhr von verdichtetem Brennmedium zu der kontinuierlich arbeitenden Brennkammer vorgesehen ist, dadurch verbessern lässt, dass ein rotierender Verteiler wenigstens zwei Verteileröffnungen aufweist, die zyklisch die Schussverbindungen öffnen und schließen. Hierdurch lassen sich genau dosierte Steuerzeiten bei verhältnismäßig kleinem Hub der Arbeitskolben in dem jeweilige Arbeitszylinder realisieren, die wiederum zu entsprechend kleinen Hüben der Verdichterkolben in dem Verdichterzylinder führen und damit den Wirkungsgrad bei der Verdichtung entsprechend verbessern. Hierbei hat sich herausgestellt, dass selbst wenn auf der Verdichterseite eine Wirkungsgradverbesserung nicht vorgesehen ist, der Wirkungsgrad des Axialkolbenmotors durch eine derartige Ausgestaltung verbessert werden kann, da der rotierende Verteiler, welcher wenigstens zwei zyklisch die Schussverbindungen öffnende und schließende Verteileröffnungen aufweist, extrem schnelle und exakt definierbare Schließ- und Öffnungszeiten im Rahmen des zyklischen Schließens und Öffnens gewährleisten kann. Selbiges gilt auch für Axialkolbenmotoren mit innerer kontinuierlicher Verbrennung mit einer kontinuierlich arbeitenden Brennkammer, mit wenigstens zwei Arbeitszylindern und mit wenigstens zwei von den Arbeitszylindern angetriebenen Verdichterzylindern, wobei Schussverbindungen zwischen der kontinuierlich arbeitenden Brennkammer und den Arbeitszylindern zyklisch schließ- und öffenbar sind und wobei zwischen den Verdichterzylindern und der Brennkammer eine Brennmediumzuleitung zur Zufuhr von verdichtetem Brennmedium zu der kontinuierlich arbeitenden Brennkammer vorgesehen ist, wenn sich der Axialkolbenmotor dadurch auszeichnet, dass ein rotierender Verteiler wenigstens zwei Verteileröffnungen aufweist, die zyklisch an Schusskanälen vorbeigeführt bzw. durch Schusskanäle hindurch geführt werden. Dementsprechend ist auch ein Verfahren zum Betrieb eines Axialkolbenmotors mit innerer kontinuierlicher Verbrennung, bei welchem verdichtetes Brennmedium gemeinsam mit Kraftstoff in einer kontinuierlich arbeitenden Brennkammer zu Arbeitsmedium verbrannt, das Arbeitsmedium zum Gewinnen mechanischer Energie zyklisch Arbeitszylindern zugeführt und die in den Arbeitszylindern gewonnene mechanische Energie auch für ein Verdichten des Brennmediums genutzt wird, vorteilhaft, wenn die Brennkammer gleichzeitig zumindest zwei geöffnete Schussverbindungen zu jeweils einem Arbeitszylinder aufweist. Dieses gilt insbesondere, wenn letzteres über einen rotierenden Verteiler geschieht, da hierdurch dementsprechende Steuerzeiten gewährleistet werden können.

Es versteht sich, dass der rotierende Verteiler vorzugsweise koaxial zur Brennkammer angeordnet ist. Dieses ermöglicht eine besonders einfache Ausgestaltung und gezielte Verteilung. Letzteres gilt insbesondere dann, wenn der Verteiler kumulativ bzw. alternativ hierzu auch koaxial zu einer Abtriebswelle angeordnet ist bzw. sogar auf dieser vorgesehen ist. Gegebenenfalls kann durch eine gezielte Relativverschiebung zwischen dem Verteiler und der Abtriebswelle die Steuerzeit in kleinen Grenzen variiert werden, um diese verschiedenen Drehzahlen oder verschiedenen sonstigen Betriebsbedingungen anzupassen.

Eine besonders kompakte Ausgestaltung, die zudem energetisch und auch baulich vorteilhaft ist, kann realisiert werden, wenn der rotierende Verteiler ein Brennkammerboden ist. Dieses gewährleistet eine besonders gezielte und unmittelbare Verteilung des Arbeitsmediums bei einem Minimum an beteiligten Baugruppen.

Vorzugsweise laufen in den Arbeitszylindern Arbeitskolben, die auf eine Kurvenscheibe eines Abtriebs wirken, welche zwei Hübe pro Umdrehung erzwingt. Insbesondere im Zusammenspiel mit den beiden Verteileröffnungen, welche vorzugsweise auf die jeweils synchron laufenden Arbeitskolben in ihrem Zyklus abgestimmt sind, kann dementsprechend ein hoher Wirkungsgrad des Axialkolbenmotors gewährleistet werden.

Vorzugsweise erfolgt der Antrieb der in den jeweiligen Verdichterzylindern laufenden Verdichterkolben durch die Arbeitszylinder jeweils durch ein gemeinsames Pleuel. Dementsprechend ist es vorteilhaft, wenn die mechanische Energie, die in den Arbeitszylindern gewonnen ist und ein Verdichten des Brennmediums genutzt wird, ohne weitere Energiewandlung zum Verdichten genutzt wird. Auch dieses ermöglicht einen besonders hohen Wirkungsgrad insbesondere bei der Verdichtung.

Gegebenenfalls könnten sogar mehr als zwei Stufen bei der Verdichtung vorgesehen sein, wobei dieses zum jetzigen Zeitpunkt nicht erforderlich erscheint, da bereits mit zwei Stufen bzw. dadurch, dass der Auslass des ersten Verdichterzylinders mit dem Einlass des zweiten Verdichterzylinders verbunden ist, bereits eine entsprechende Erhöhung des Wirkungsgrads erzielt werden kann.

Dementsprechend ist es von Vorteil, wenn ein Einlass des ersten Verdichterzylinders mit einem Brennmediumeinlass, beispielsweise mit einer Ansaugöffnung, verbunden ist. Kumulativ bzw. alternativ hierzu kann dementsprechend ein Auslass des zweiten Verdichterzylinders mit der Brennmediumzuleitung verbunden sein, sodass das in dem zweiten Verdichterzylinder verdichtete Brennmedium der kontinuierlich arbeitenden Brennkammer zugeführt wird, was insbesondere dann durch einen oder mehrere Wärmetauscher geschehen kann.

Der Wirkungsgrad bei der Verdichtung kann insbesondere dann verhältnismäßig hoch gewählt werden, wenn der erste Verdichterzylinder einen deutlich größeren Durchmesser als der zweite Verdichter aufweist. So kann der erste Verdichterzylinder eine wesentlich größeres Volumen an Luft entsprechend verdichten und dem zweiten Verdichterzylinder dann komprimiert zur Verfügung stellen, sodass dieser zumindest ungefähr dieselbe Menge an Luft dementsprechend weiter komprimieren kann. Es versteht sich, dass hier ggf. kleinere Abweichungen vorgesehen sein können, die letztlich vom Gesamtsystem toleriert werden.

Vorzugsweise weist der zweite Verdichterzylinder eine Zylinderfläche auf, die der Wurzel aus dem Verdichtungsverhältnis multipliziert mit einer Fläche des ersten Verdichterzylinders entspricht. Dieses bedingt, dass - je nach Betriebspunkt des Axialkolbenmotors - optimal Brennmittel bereitgestellt werden und so der Axialkolbenmotor mit hohem Wirkungsgrad betrieben werden kann. Entsprechendes gilt, wenn mehrere erste und zweite Verdichterzylinder vorliegen, deren Zylinderflächen miteinander verglichen werden.

In diesem Zusammenhang sei darauf hingewiesen, dass das Verdichtungsverhältnis das Verhältnis zwischen der Verdichtung in der ersten Stufe bzw. in dem ersten Verdichterzylinder und der Verdichtung in der zweiten Stufe bzw. in dem zweiten Verdichterzylinder. Die Verdichtung wird geprägt durch den Hub, den der jeweilige Kolben durchläuft, und den Durchmesser des jeweiligen Zylinders. Allerdings spielen auch der zur Verfügung stehende Eingangsdruck und der jeweilige Ausgangsdruck eine wesentliche Rolle, wobei diese jedoch vom Betriebszustand des jeweiligen Axialkolbenmotors abhängen, während Hub und Durchmesser geometrisch Festgrößen des jeweiligen Axialkolbenmotors darstellen. Ebenso bestimmen die Durchmesser der Zu- und Ableitungen sowie die Ventilöffnungszeiten die Verdichtung. In vorliegendem Zusammenhang bezieht sich die Angabe des Verdichtungsverhältnisses auf die gewünschten Verdichtungsverhältnisse der beiden Stufen unter Berücksichtigung sämtlicher dieser Faktoren.

Insbesondere hat sich herausgestellt, dass - anders als bei einer diskontinuierlichen Verbrennung - ein Verdichtungs-Expansions-Verhältnis bei Axialkolbenmotoren mit innerer kontinuierlicher Verbrennung im Wesentlichen durch die Steuerzeiten der Ventile beeinflusst wird, während den Durchmessern der Zylinder bzw. der Hubvolumina diesbezüglich nur eine untergeordnete Rolle zugestanden werden kann.

Darüber hinaus ist es von Vorteil, wenn der erste Verdichterzylinder annähernd den Durchmesser des Arbeitszylinders aufweist. Zwar offenbart die WO 2011/009454 A2 bereits, dass das Brennmedium während der Expansion in den Arbeitszylindern mit einem größeren Druckverhältnis als ein während der Verdichtung in den Verdichterzylindern vorliegendes Druckverhältnis expandiert werden bzw. die Verdichterstufe ein kleineres Hubvolumen als das Hubvolumen der Expanderstufe haben soll. Genau Angaben hinsichtlich der Durchmesser fehlen jedoch. Es hat sich jedoch herausgestellt, dass auch deutlich kleinere Durchmesser als der Durchmesser des Arbeitszylinders sehr gute Ergebnisse liefern können. So kann der Durchmesser des ersten Verdichterzylinders kleiner als 90 % des Durchmessers eines der Arbeitszylinder sein. Insbesondere können dieses weniger als 85 %, vorzugsweise sogar weniger als 83 %, sein. Als untere Grenze scheint hier ein Durchmesser des ersten Verdichterzylinders zu sein, wenn bei weiterer Reduktion kein Wirkungsgradgewinn mehr vorliegt, da dann erhöhte Reibungen und ähnliches auftritt. Entsprechend können bei mehreren ersten Verdichterzylindern Durchmessersummen der ersten Verdichterzylinder mit Durchmessersummen der entsprechenden Zahl an Arbeitszylindern verglichen werden.

Insbesondere kann der erste Verdichterzylinder bzw. können die ersten Verdichterzylinder derart dimensioniert sein, dass durch den bzw. die ersten Verdichterzylinder für einen Leerlauf des Axialkolbenmotors ausreichend verdichtetes Brennmedium bereitgestellt ist. Auch kann kumulativ bzw. alternativ hierzu in der ersten Stufe ausreichend verdichtetes Brennmedium für den Leerlauf des Axialkolbenmotors bereitgestellt werden. In einer konkreten Umsetzung können beispielsweise eine oder mehrere Brennmittelleitungen unmittelbar von dem oder den ersten Verdichterzylindern oder der ersten Stufe zu der Brennkammer vorgesehen sein. Auch kann das verdichtete Brennmittel einfach durch die zweite Stufe bzw. durch den oder die zweiten Verdichterzylinder hindurchgefördert werden, ohne dass eine nennenswerte Verdichtung in der zweiten Stufe bzw.in dem oder den zweiten Verdichterzylindern stattfindet. Bei einer derartigen Dimensionierung des oder der ersten Verdichterzylinder bzw. bei einer derartigen Ausgestaltung der ersten Stufe kann im Leerlauf auf eine weitere Verdichtung in der zweiten Stufe bzw. in einem oder mehreren zweiten Verdichterzylindern verzichtet werden, was dann entsprechend energetisch günstig ist. Letzteres geschieht an sich automatisch, wenn von der Brennkammer im Leerlauf nur ein geringerer Druck und bei Volllast ein hoher Druck abgefragt wird.

Es versteht sich, dass insbesondere mehrere erste Verdichterzylinder mit jeweils einem Auslass bzw. mehrere zweite Verdichterzylinder mit jeweils einem Einlass vorgesehen sein können, die insbesondere entsprechend der Zyklen des Axialkolbenmotors bzw. des Betriebsverfahren angeordnet sind.

Hierbei kann in einer konkreten Umsetzung jeder der Auslässe des jeweiligen ersten Verdichterzylinders mit genau einem der Einlässe eines der zweiten Verdichterzylinder verbunden sein, sodass die Verdichterstufen jeweils exakt und genau zwischen diesen Verdichterzylindern stattfinden.

Andererseits ist es denkbar, dass ein Auslass eines der mehreren ersten Verdichterzylindern mit mehreren Einlässen der zweiten Verdichterzylinder verbunden ist. Ebenso kann ein Einlass der zweiten Verdichterzylinder mit mehreren Auslässen der ersten Verdichterzylinder verbunden sein, sodass das jeweils durch die ersten Verdichterzylinder verdichtete Brennmedium dann je nach Bedarf wenigstens zwei zweiten Verdichterzylindern zur Verfügung steht. Dieses bedingt einen gewissen Puffer, der zum einen für eine Zwischenkühlung genutzt werden kann und der zum anderen etwaige Ungenauigkeiten bei der Ansteuerung der Einlässe und Auslässe bzw. bei der Verdichtung in den einzelnen Verdichterzylindern ausgleichen kann.

Es versteht sich, dass jeder der ersten Verdichterzylinder auch dementsprechend einen Einlass und jeder der zweiten Verdichterzylinder auch jeweils einen Auslass aufweisen sollte, wobei - je nach konkreter Umsetzung - die Einlässe der ersten Verdichterzylinder beispielsweise mit einem eigenen Brennmediumeinlass oder aber mit gemeinsamen Brennmediumeinlässen oder sogar lediglich mit einem gemeinsamen Brennmediumeinlass bzw. in einer abweichenden Ausführungsform mit einer zuvorigen Verdichterstufe verbunden sein können. Ebenso können die Auslässe der zweiten Verdichterzylinder jeweils mit eigenen Brennmediumzuleitungen zu der Brennkammer verbunden sein, die jeweils durch Wärmetauscher gemeinsam oder getrennt bzw. durch jeweils eigens konzipierte Wärmetauscher laufen. Ebenso ist es denkbar, dass die Auslässe der zweiten Verdichterzylinder zunächst einmal gesammelt und dann mit lediglich einer Brennmediumzuleitung bzw. von einem Sammler ausgehend über mehrere Brennmediumzuleitungen, die ggf. ebenfalls durch Wärmetauscher laufen, mit der Brennkammer verbunden sind. Auch kann den zweiten Verdichterzylindern ggf. eine dritte Verdichterstufe folgen, indem die Auslässe jeweils mit einem oder mehreren Einlässen dritter Verdichterzylinder verbunden sind.

Wie bereits vorstehend dargelegt, kann zwischen den Verdichtungsstufen eine Zwischenkühlung vorgesehen sein. Dementsprechend lässt sich die Verdichtung einer isothermen Verdichtung annähern, wenn zwischen den beiden Stufen eine Zwischenkühlung erfolgt bzw. zwischen dem Auslass des ersten Verdichterzylinders und dem Einlass des zweiten Verdichterzylinders ein Zwischenkühler vorgesehen ist.

Ein derartiger Zwischenkühler weist technische Maßnahmen auf, die über eine einfache Leitungsführung bzw. über einfache Wandungen hinausgehen, um für eine Kühlung zu sorgen. Insbesondere kann ein derartiger Zwischenkühler Kühlrippen, Kühlplatten oder sogar Kühlwände umfassen. Auch kann eine separate Anströmung mit Kühlmittel, beispielsweise Kühlluft oder Kühlflüssigkeit, erfolgen. Ebenso ist es denkbar, Kühlschlangen an entsprechenden Wandungen, in denen das Brennmedium gekühlt werden soll, vorbei zu führen, um einen entsprechenden Zwischenkühler bereitzustellen.

Vorzugsweise wird sichergestellt, dass das Verdichten bei Verdichtungsendtemperaturen unter 280°C, insbesondere unter 270°C erfolgt. Einer isothermen Verdichtung kann sich hierdurch angenähert werden.

Zwischen dem Auslass des ersten Verdichterzylinders und dem Einlass des zweiten Verdichterzylinders kann ein Zwischenspeicher vorgesehen sein, sodass ein gewisser Überschuss in dem ersten Verdichterzylinder verdichteten Brennmedium in dem Zwischenspeicher zwischengespeichert werden kann, der dann für kurzfristige Leistungssteigerungen bzw. für Anfahrprozesse genutzt werden kann. Zwar kann ein derartiger Zwischenspeicher einen getrennten Einlass und einen getrennten Auslass aufweisen, sodass er - da das Brennmedium gasförmig ist - in gewisser Weise das Brennmedium durchleitet, was jedoch baulich verhältnismäßig aufwendig ist. Vorzugsweise umfasst der Zwischenspeicher lediglich einen Anschluss an den Auslass des ersten Verdichterzylinders bzw. an den Einlass des zweiten Verdichterzylinders, sodass das Brennmedium durch diesen einzigen Anschluss in den Zwischenspeicher hinein und aus dem Zwischenspeicher heraus gelangen kann. Um eine genaue Ansteuerung des Zwischenspeichers zu gewährleisten, sind die jeweiligen Anschlüsse vorzugsweise mit entsprechenden Ventilen versehen. Gegebenenfalls kann der Zwischenspeicher auch als Zwischenkühler genutzt werden, wenn entsprechend kühlende Maßnahme, wie sie bereits vorstehend erläutert sind, vorgesehen sind.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Schnittansicht eines ersten Axialkolbenmotors;
- Figur 2: einen schematischen Querschnitt durch den Brennkammerboden des Axialkolbenmotors nach Figur 2;
- Figur 3: einen schematischen Querschnitt durch die Verdichterzylinder des Axialkolbenmotors nach Figuren 1 und 2;
- Figur 4: einen schematischen Querschnitt durch die Verdichterzylinder eines zweiten Axialkolbenmotors;
- Figur 5: eine schematische Schnittansicht eines dritten Axialkolbenmotors in ähnlicher Darstellung wie Figur 1; und
- Figur 6: ein Prinzipdiagramm der Axialkolbenmotoren nach Figuren 1 bis 5.

Die in der Zeichnung dargestellten Axialkolbenmotoren 10 weisen jeweils eine Brennkammer 20 auf, welcher Brennmedium über Brennmediumzuleitungen 21 zugeführt wird, das in der Brennkammer 20 gemeinsam mit Kraftstoff, der über eine oder mehrere Kraftstoffzuleitungen 22 der Brennkammer 20 aufgegeben wird, kontinuierlich zu Arbeitsmedium verbrannt wird.

Das Arbeitsmedium wird über Schussverbindungen 25, die bei diesen Ausführungsbeispielen als Schusskanäle 26 ausgebildet sind, Arbeitszylindern 30 zugeführt, in welchen Arbeitskolben 35 hin und her laufen, welche aus dem Arbeitsmedium mechanische Energie gewinnen und diese ihrerseits einen Abtrieb 60 zuführen, der seinerseits eine Kurvenscheibe 62 und eine Abtriebswelle 61 umfasst.

Hierbei sind die Arbeitskolben 35 mit Pleuel 50 versehen, welche auf der Kurvenscheibe 62 hin und her laufen.

Darüber hinaus wird die durch die Arbeitskolben 35 bzw. in den Arbeitszylindern 30 gewonnene mechanische Energie Verdichterkolben 46, 47 zugeführt, welche in Verdichterzylindern 41, 42 hin und her laufen, sodass dort eine Verdichtung des Brennmediums durchgeführt wird.

Das verdichtete Brennmedium gelangt dann über die Brennmediumzuleitung 21 wieder zu der Brennkammer 20 wobei hierzu noch Wärmetauscher 55 durchlaufen werden, in welchem die thermische Restenergie des Arbeitsmediums, wenn dieses die Arbeitszylinder 30 verlässt, dem der kontinuierlich arbeitenden Brennkammer 20 zugeführten Brennmedium zugeführt werden kann. Das Arbeitsmedium verlässt die Wärmetauscher 55 als Abgas 56.

Es versteht sich, dass in abweichenden Ausführungsformen lediglich ein Wärmetauscher 55 und lediglich eine Brennmediumzuleitung 21 vorgesehen sein kann. Ebenso kann - unter Umständen - bei besonderen Ausführungsformen eine Brennmediumzuleitung 21 vorgesehen sein, welche keinen Wärmetauscher durchläuft. Auch gibt es Ausführungsformen, bei denen mehrere Wärmetauscher 55 vorgesehen sind, die jeweils von mehreren Brennmittelleitungen 21 bzw. von Brennmittelleitungen 21 aus mehreren Verdichterzylindern 41, 42 und/oder von mehreren Arbeitsmediumleitungen bzw. von Arbeitsmediumleitungen aus mehreren Arbeitszylindern durchlaufen werden.

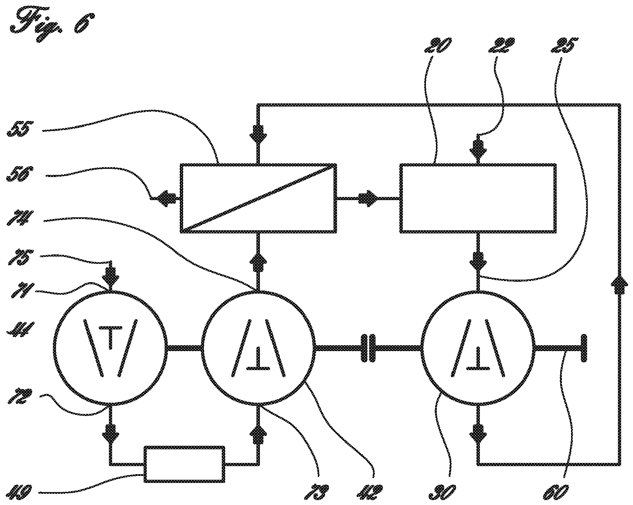

Die Brennkammer 20 kann einstufig, zweistufig oder mehrstufig ausgebildet sein, was letztlich für die Erläuterung der vorliegenden Erfindung unerheblich ist. Wie aus Figur 6 ersichtlich, kann, je niedriger die Temperatur des verdichteten Brennmittels beim Eingang in den Wärmetauscher 55 ist, möglichst viel Energie aus dem Arbeitsmedium rückgewonnen werden, nachdem dieses die Arbeitszylinder 30 verlässt.

Bei allen Ausführungsbeispielen weist der Axialkolbenmotor 10 jeweils einen rotierenden Verteiler 27 auf, welcher Arbeitsmedium jeweils sukzessive auf die Arbeitszylinder 30 verteilt.

Hierbei ist bei diesen Ausführungsbeispielen der rotierende Verteiler 27 als Brennkammerboden 28 ausgebildet, wobei rein theoretisch auch andere Ausgestaltungen, wie beispielsweise ein separater rotierender Verteilerring, welcher in den Schusskanälen 26 umläuft und diese durchtrennt, oder auch eine andere rotierende Einrichtung, welche in der Lage ist Arbeitsmedium sukzessive auf die Arbeitszylinder 30 zu verteilen, vorgesehen sein können.

Der rotierende Verteiler 27 weist Verteileröffnungen 29 auf, welche bei der Rotation jeweils an den Schusskanälen 26 vorbei laufen, sodass auf diese Weise die Schussverbindungen 25 zügig geöffnet und geschlossen werden.

Bei dem vorliegenden Ausführungsbeispiel ist der rotierende Verteiler 27 mit der Antriebswelle 61 bzw. der Kurvenscheibe 62 verbunden, sodass er mit diesen mit rotiert. Gegebenenfalls kann durch eine Verlagerung des Drehwinkels des rotierenden Verteilers 27 in Bezug auf die Kurvenscheibe 62 bzw. in Bezug auf die Abtriebswelle 61 die Synchronisation zwischen der Rotation des Verteilers 27 und der Rotation der Kurvenscheibe 62 bzw. der Abtriebswelle 61 an gegebene Betriebsbedingungen, wie beispielsweise an kurzzeitige Leistungsanfragen bzw. an unterschiedliche Drehzahlen, angepasst werden.

Beim vorliegenden Ausführungsbeispielen wird jeweils in zwei Stufen verdichtet, sodass bauliche trennbare erste Verdichterzylinder 41 und zweite Verdichterzylinder 42 zu definieren sind. Es versteht sich, dass ggf. auf eine zweistufige Verdichtung und mithin auf eine Unterscheidung zwischen ersten Verdichterzylindern 41 und zweiten Verdichterzylindern 42 verzichtet werden kann, wenn die Vorteile des rotierenden Verteilers und die zugehörigen Merkmale einzeln genutzt werden sollen. Ebenso kann auf den rotierenden Verteiler 27 verzichtet werden, wenn die Schussverbindungen 25 in herkömmlicher Weise genutzt werden und eine zweistufige Verdichtung vorgesehen sein sollen.

Jeder der Verdichterzylinder 41, 42 weist jeweils einen Einlass 71, 73 und einen Auslass 72, 74 auf.

Hierbei sind die Einlässe 71 der ersten Verdichterzylinder 41 jeweils mit einem Brennmediumeinlass 75 verbunden, wobei in abweichenden Ausführungsformen auch mehrere Einlässe 71 der ersten Verdichterzylinder 41 mit einem gemeinsamen Brennmediumeinlass 75 verbunden sein können.

Auch sind die Auslässe 72 der ersten Verdichterzylinder 41 jeweils mit den Einlässen der zweiten Verdichterzylinder 42 verbunden, was bei vorliegenden Ausführungsbeispielen jeweils über ein Sammelrohr 78 geschieht, welches auch als Zwischenkühler 49 genutzt wird. Es versteht sich, dass statt des Sammelrohrs 78 auch eine unmittelbare Verbindung jeweils zwischen eines Auslasses 72 des ersten Verdichterzylinders 41 und einem Einlass 73 des zweiten Verdichterzylinders 42 vorgesehen sein kann, sodass jeweils ein erster Verdichterzylinder 51 mit genau einem zweiten Verdichterzylinder 42 kommuniziert.

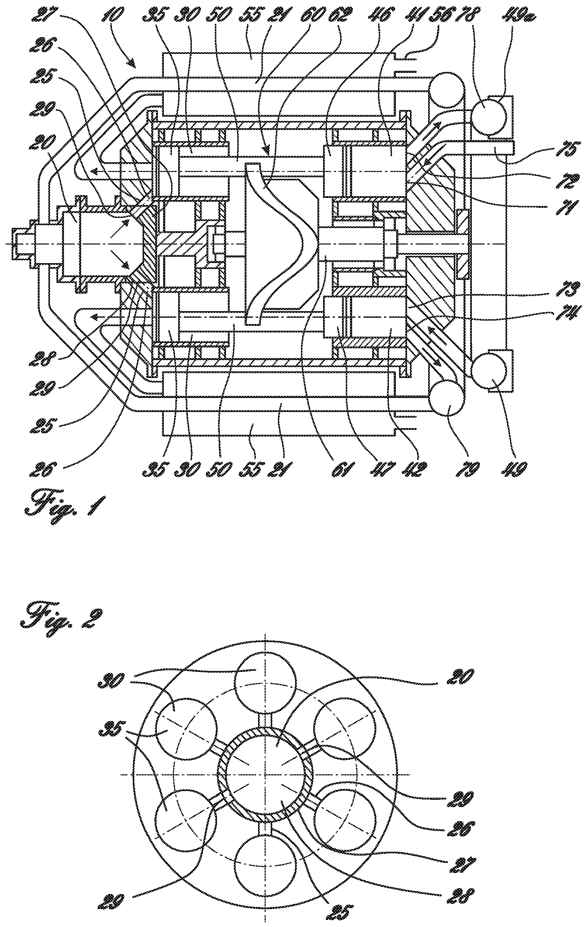

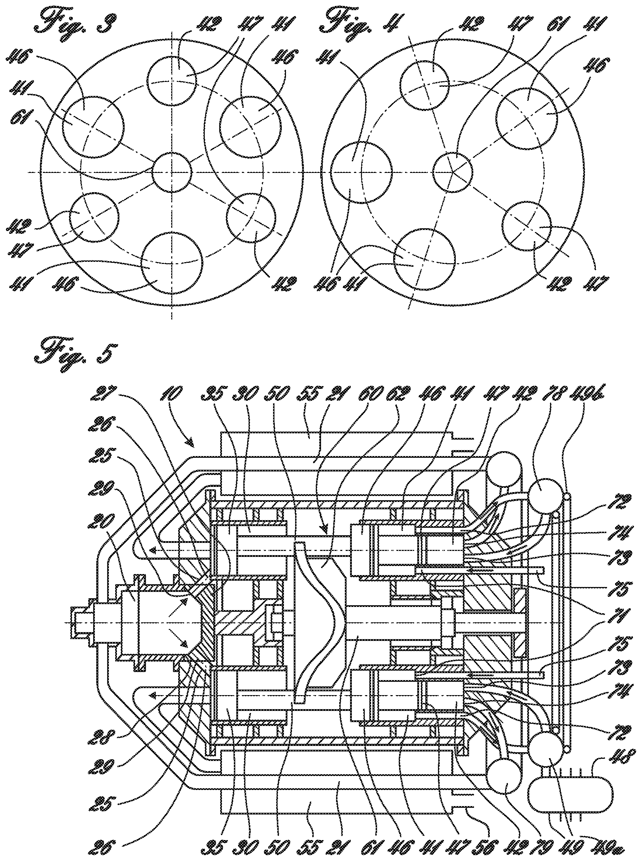

Damit das Sammelrohr als Zwischenkühler 49 wirksam sein kann, ist dieses bei dem Ausführungsbeispiel nach Figuren 1 bis 4 mit Kühlplatten 49a versehen, während dieses bei dem Ausführungsbeispiel nach Figur 5 Kühlschlangen 49b aufweist, in welchem Kühlmedium fließt.

Auf diese Weise kann durch die Zweistufigkeit und die Zwischenkühlung die Verdichtungsendtemperatur bei einem Verdichtungsverhältnis von 16 über beide Stufen auf 250°C begrenzt werden. Dieses ermöglicht es, die Verdichtung einer isothermen Verdichtung mit ihrem entsprechend gutem Wirkungsgrad anzunähern.

Bei dem Ausführungsbeispiel nach Figur 5 ist darüber hinaus ein Zwischenspeicher 48 vorgesehen, der über eine nicht näher bezifferte Leitung, in welcher ein nicht dargestelltes Ventil vorgesehen ist, mit dem Sammelrohr 78 verbunden ist, sodass hier in der ersten Stufe verdichtetes Brennmedium zwischengespeichert werden kann. Der Zwischenspeicher 48 dient bei diesem Ausführungsbeispiel auch als Zwischenkühler 49 und ist hierzu ebenfalls mit Kühlplatten 49a versehen. Da häufig das Brennmedium in dem Zwischenspeicher 48 über längere Zeit zwischengespeichert werden soll, kann auf eine Ausgestaltung des Zwischenspeichers 48 als Zwischenkühler 49 ohne weiteres verzichtet werden, wenn beispielsweise eine kurzzeitige Zwischenspeicherung bei einem entsprechendem Betriebsverfahren die Ausnahme bleibt.

Darüber hinaus sind die Auslässe 74 der zweiten Verdichterzylinder 42 jeweils mit einem Sammelrohr 79 versehen, von welchem die Brennmediumzuleitungen 21 abgehen.

Wie unmittelbar ersichtlich, erreicht somit das Brennmedium die Wärmetauscher 55 bei einer möglichst niedrigen Temperatur, was zunächst einmal thermodynamisch widersinnig erscheint, da es letztlich darauf anzukommen scheint, dass Brennmedium bis zur Brennkammer 20 auf möglichst hohe Temperatur zu bringen. Andererseits erweist sich die isotherme Verdichtung als derartig energetisch effektiv, dass der Aufwand einer Zwischenkühlung bzw. der zweistufigen Verdichtung gerechtfertigt erscheint.

Bei vorliegendem Ausführungsbeispielen weisen die ersten Verdichterzylinder 41 einen deutlich größeren Durchmesser auf als die zweiten Verdichterzylinder 42. Der Durchmesser der ersten Verdichterzylinder 41 ist das 1,8-fache des Durchmessers der zweiten Verdichterzylinder 42.

Darüber hinaus sind bei diesen Ausführungsbeispielen die Durchmesser der ersten Verdichterzylinder 41 annähernd so groß wie die Durchmesser der Arbeitszylinder 30. Im konkreten ist der Durchmesser der ersten Verdichterzylinder 41 kleiner als der Durchmesser der Arbeitszylinder 30 aber nicht kleiner als 96 % des Durchmessers der Arbeitszylinder 30.

Bei dem Ausführungsbeispiel nach Figuren 1 bis 4 ist je Arbeitskolben 35 bzw. Arbeitszylinder 30 jeweils genau ein Verdichterzylinder 41, 42 bzw. Verdichterkolben 46, 47 vorgesehen, wobei bei dem Ausführungsbeispiel nach Figuren 1 bis 3 jeweils drei erste Verdichterzylinder 41 und drei zweite Verdichterzylinder 42 vorgesehen sind, welche rotationssymmetrisch bzgl. der Abtriebswelle 61 bzw. der Kurvenscheibe 62 und der Brennkammer 20 angeordnet sind, sodass der Axialkolbenmotor 10 möglichst ausgewuchtet läuft, wobei durch Ausgestaltungen der Pleuel und der Kolben etwaige Unwuchten noch minimiert werden können.

Prinzipiell ist die Anordnung bei dem Axialkolbenmotor 10 nach Figur 4 ähnlich, sodass je Verdichterzylinder 41, 42 auch genau ein Arbeitszylinder 30 vorgesehen ist, die jeweils koaxial angeordnet sind. Allerdings sind lediglich zwei zweite Verdichterzylinder 42 und drei erste Verdichterzylinder 41 vorgesehen, die dementsprechend möglichst symmetrisch um die Abtriebswelle 41, die Kurvenscheibe 62 bzw. die Brennkammer 20 angeordnet sind. Auch hier kann die Kurvenscheibe 62 derart ausgestaltet sein, dass sie zwei Hübe pro Umdrehung erzwingt, wobei dann die Verteileröffnungen 29 in geeigneter Weise ausgestaltet sein sollten und ggf. die Schusskanäle 26 auf unterschiedlichen Ebenen aufweisen und mit unterschiedlichen Verteileröffnungen 29 wechselwirken. Ebenso kann hier selbstverständlich eine herkömmliche Öffnung der Schussverbindungen 25 vorgesehen sein. Auch ist es denkbar, lediglich eine Verteileröffnung 29 vorzusehen, und die Kurvenscheibe 62 derart auszubilden, dass sie lediglich einen Hub pro Umdrehung erzwingt.

Bei dem in Figur 5 dargestellten Ausführungsbeispiel sind zwei Verdichterzylinder 41 mit einem Arbeitskolben 35 in Wechselwirkung. Hierzu sitzen die zugehörigen Verdichterkolben 46, 47 jeweils aufeinander, wobei es von Vorteil ist, den Verdichterkolben 47 des zweiten Verdichterzylinders 42, welcher vorzugsweise einen kleineren Durchmesser aufweisen sollen, auf den Verdichterkolben 46 des ersten Verdichterzylinders 41 aufzusetzen.

**Bezugszeichenliste**

| | | | |
|---|---|---|---|
| 10 | Axialkolbenmotor | 49b | Kühlschlange |
| | | | |
| 20 | Brennkammer | 50 | Pleuel |
| 21 | Brennmediumzuleitung | 55 | Wärmetauscher |
| 22 | Kraftstoffzuleitung | 56 | Abgas |
| 25 | Schussverbindungen | | |
| 26 | Schusskanal | 60 | Abtrieb |
| 27 | rotierender Verteiler | 61 | Abtriebswelle |
| 28 | Brennkammerboden | 62 | Kurvenscheibe |
| 29 | Verteileröffnung | | |
| | | 71 | Einlass des ersten Verdichterzylinders 41 |
| 30 | Arbeitszylinder | | |
| 35 | Arbeitskolben | 72 | Auslass des ersten Verdichterzylinders 41 |
| 41 | erster Verdichterzylinder | 73 | Einlass des zweiten Verdichterzylinders 42 |
| 42 | zweiter Verdichterzylinder | | |
| 46 | Verdichterkolben | 74 | Auslass des zweiten Verdichterzylinders 42 |
| 47 | Verdichterkolben | | |
| 48 | Zwischenspeicher | 75 | Brennmediumeinlass |
| 49 | Zwischenkühler | 78 | Sammelrohr |
| 49a | Kühlplatte | 79 | Sammelrohr |

## Patentansprüche

1. Axialkolbenmotor (10) mit innerer kontinuierlicher Verbrennung mit einer kontinuierlich arbeitenden Brennkammer (20), mit wenigstens zwei Arbeitszylindern (30) und mit wenigstens zwei von den Arbeitszylindern (30) angetriebenen Verdichterzylindern (41, 42), wobei Schussverbindungen (25) zwischen der kontinuierlich arbeitenden Brennkammer (20) und den Arbeitszylindern (30) zyklisch schließ- und offenbar sind und wobei zwischen den Verdichterzylindern (41, 42) und der Brennkammer (20) eine Brennmediumzuleitung (21) zur Zufuhr von verdichtetem Brennmedium zu der kontinuierlich arbeitenden Brennkammer (20) vorgesehen ist, **dadurch gekennzeichnet, dass** ein Auslass (72) eines ersten Verdichterzylinders (41) der beiden Verdichterzylinder (41, 42) mit einem Einlass (73) eines zweiten Verdichterzylinders (42) der beiden Verdichterzylinder (41, 42) verbunden ist.

2. Axialkolbenmotor (10) nach Anspruch 1, **dadurch gekennzeichnet, dass** ein Einlass (71) des ersten Verdichterzylinders (41) mit einem Brennmediumeinlass (75) und ein Auslass (74) des zweiten Verdichterzylinders (42) mit der Brennmediumzuleitung (21) verbunden ist.

3. Axialkolbenmotor (10) nach Anspruch 1 oder 2, **dadurch gekennzeichnet, dass** der zweite Verdichterzylinder (42) eine Zylinderfläche aufweist bzw. die zweiten Verdichterzylinder (42) insgesamt eine Zylinderfläche aufweisen, die der Wurzel aus dem Verdichtungsverhältnis multipliziert mit einer Fläche des ersten Verdichterzylinders (41) bzw. der ersten Verdichterzylinder (41) entspricht.

4. Axialkolbenmotor (10) nach einem der Ansprüche 1 bis 3, **dadurch gekennzeichnet, dass** der Durchmesser des ersten Verdichterzylinders (41) kleiner als 90 %, vorzugsweise 85 %, insbesondere 83 %, des Durchmessers eines der Arbeitszylinder (30) ist.

5. Axialkolbenmotor (10) nach einem der Ansprüche 1 bis 4, **dadurch gekennzeichnet, dass** der erste Verdichterzylinder (41) derart dimensioniert ist bzw. die ersten Verdichterzylinder (41) derart dimensioniert sind, dass durch den bzw. die Verdichterzylinder (41) für einen Leerlauf des Axialkolbenmotors (10) ausreichend verdichtetes Brennmedium bereitgestellt ist.

6. Axialkolbenmotor (10) nach einem der Ansprüche 1 bis 5, **dadurch gekennzeichnet, dass** der rotierende Verteiler (27) ein Brennkammerboden (28) ist.

7. Axialkolbenmotor (10) nach einem der Ansprüche 1 bis 6, **dadurch gekennzeichnet, dass** ein rotierender Verteiler (27) wenigstens zwei Verteileröffnungen (29) aufweist, die zyklisch die Schußverbindungen (25) öffnen und schließen und/oder zyklisch an Schusskanälen (26) vorbeigeführt bzw. durch Schusskanäle (26) hindurchgeführt werden.

8. Axialkolbenmotor (10) nach einem der Ansprüche 1 bis 7, **dadurch gekennzeichnet, dass** in den Arbeitszylindern (30) Arbeitskolben (35) laufen, die auf eine Kurvenscheibe (62) eines Abtriebs (60) wirken, welche zwei Hübe pro Umdrehung erzwingt.

9. Axialkolbenmotor (10) nach einem der Ansprüche 1 bis 8, **dadurch gekennzeichnet, dass** mehrere erste Verdichterzylinder (41) mit jeweils einem Auslass (72) und/oder mehrere zweite Verdichterzylinder (42) mit jeweils einem Einlass (73) vorgesehen sind, wobei jeder der Auslässe (72) mit genau einem der Einlässe (73) verbunden ist oder wobei ein Auslass (72) mit mehreren Einlässen (72) und/oder ein Einlass (73) mit mehreren Auslässen (72) verbunden ist.

10. Axialkolbenmotor (10) nach einem der Ansprüche 1 bis 9, **dadurch gekennzeichnet, dass** zwischen dem Auslass (72) des ersten Verdichterzylinder (41) und dem Einlass (73) des zweiten Verdichterzylinders (42) eine Zwischenspeicher (48) und/oder ein Zwischenkühler (49) vorgesehen ist.

11. Verfahren zum Betrieb eines Axialkolbenmotors (10) mit innerer kontinuierlicher Verbrennung, gemäss Anspruch 1, bei welchem verdichtetes Brennmedium gemeinsam mit Kraftstoff in einer kontinuierlich arbeitenden Brennkammer (20) zu Arbeitsmedium verbrannt, das Arbeitsmedium zum Gewinnen mechanischer Energie zyklisch Arbeitszylindern (30) zugeführt und die in den Arbeitszylindern (30) gewonnene mechanische Energie auch für ein Verdichten des Brennmediums genutzt wird, **dadurch gekennzeichnet, dass** das Verdichten in zwei Stufen erfolgt.

12. Betriebsverfahren nach Anspruch 11, **dadurch gekennzeichnet, dass** die Brennkammer (20) gleichzeitig zumindest zwei geöffnete Schußverbindungen (25) zu jeweils einem Arbeitszylinder (30) aufweist.

13. Betriebsverfahren nach Anspruch 11 oder 12, **dadurch gekennzeichnet, dass** zwischen den beiden Stufen eine Zwischenkühlung erfolgt.

14. Betriebsverfahren nach einem der Ansprüche 11 bis 13, **dadurch gekennzeichnet, dass** das Verdichten bei Verdichtungsendtemperaturen unter 280 °C, vorzugsweise unter 270 °C, erfolgt.

15. Betriebsverfahren nach einem der Ansprüche 11 bis 14, **dadurch gekennzeichnet, dass** in der ersten Stufe ausreichend verdichtetes Brennmedium für den Leerlauf des Axialkolbenmotors (10) bereitgestellt wird.

## Claims

1. An axial piston motor (10) with continuous internal combustion with a continuously operating combustion chamber (20), with at least two working cylinders (30) and with at least two compression cylinders (41, 42) driven by the working cylinders (30), wherein firing connections (25) between the continuously operating combustion chamber (20) and the working cylinders (30) can be cyclically opened and closed, and wherein a combustion medium supply line (21) for supplying compressed combustion medium to the continuously operating combustion chamber (20) is provided between the compression cylinders (41, 42) and the combustion chamber (20), **characterized in that** an outlet (72) of a first compression cylinder (41) of the two compression cylinders (41, 42) is connected to an inlet (73) of a second compression cylinder (42) of the two compression cylinders (41, 42).

2. The axial piston motor (10) according to claim 1, **characterized in that** an inlet (71) of the first compression cylinder (41) is connected to a combustion medium inlet (75) and an outlet (74) of the second compression cylinder (42) is connected to the combustion medium supply line (21).

3. The axial piston motor (10) according to claim 1 or 2, **characterized in that** the second compression cylinder (42) has a cylinder surface or the second compression cylinders (42) have a total cylinder surface which corresponds to the square root of the compression ratio multiplied by a surface of the first compression cylinder (41) or of the first compression cylinders (41) .

4. The axial piston motor (10) according to any one of claims 1 to 3, **characterized in that** the diameter of the first compression cylinder (41) is less than 90%, preferably 85%, in particularly 83% of the diameter of one of the working cylinders (30).

5. The axial piston motor (10) according to any one of claims 1 to 4, **characterized in that** the first compression cylinder (41) is dimensioned or the first compression cylinders (41) are dimensioned in such a way that sufficient compressed combustion medium is provided by the compression cylinder(s) (41) for idling the axial piston motor (10).

6. The axial piston motor (10) according to any one of claims 1 to 5, **characterized in that** the rotating distributor (27) is a bottom (28) of a combustion chamber.

7. The axial piston motor (10) according to any one of claims 1 to 6, **characterized in that** a rotating distributor (27) has at least two distribution openings (29) which cyclically open and close the firing connections (25) and/or are cyclically guided past firing channels (26) or are guided through firing channels (26).

8. The axial piston motor (10) according to any one of claims 1 to 7, **characterized in that** working pistons (35), running in the working cylinders (30), act on a cam disk (62) of a drive (60), which forces two strokes per revolution.

9. The axial piston motor (10) according to any one of claims 1 to 8, **characterized in that** a plurality of first compression cylinders (41) are each provided with an outlet (72) and/or a plurality of second compression cylinders (42) are each provided with an inlet (73), wherein each of the outlets (72) is connected to precisely one of the inlets (73) or wherein one outlet (72) is connected to a plurality of inlets (72) and/or one inlet (73) is connected to a plurality of outlets (72).

10. The axial piston motor (10) according to any one of claims 1 to 9, **characterized in that** a buffer (48) and/or an intercooler (49) is provided between the outlet (72) of the first compression cylinder (41) and the inlet (73) of the second compression cylinder (42) .

11. A method for operating an axial piston motor (10) with continuous internal combustion according to claim 1 in which compressed combustion medium is combusted together with fuel in a continuously operating combustion chamber (20) to form a working medium which is supplied to cyclical working cylinders (30) in order to extract mechanical energy, and the mechanical energy extracted in the working cylinders (30) is also used for a compression of the combustion medium, **characterized in that** the compression is carried out in two steps.

12. The operating method according to claim 11, **characterized in that** the combustion chamber (20) simultaneously has at least two open firing connections (25) to one working cylinder (30) in each case.

13. The operating method according to claim 11 or 12, **characterized in that** an intermediate cooling is carried out between the two steps.

14. The operating method according to any one of claims 11 to 13, **characterized in that** the compression is carried out at compression end temperatures of less than 280ºC, preferably less than 270ºC.

15. The operating method according to any one of claims 11 to 14, **characterized in that** in the first step, sufficient compressed combustion medium is provided for idling the axial piston motor.

## Revendications

1. Moteur à pistons axiaux (10) avec combustion interne continue avec une chambre de combustion (20) fonctionnant en continu, avec au moins deux cylindres de travail (30) et avec au moins deux cylindres de compression (41,42) entraînés par les cylindres de travail (30), les liaisons d'admission (25) entre la chambre de combustion (20) fonctionnant en continu et les cylindres de travail (30) pouvant se fermer ou s'ouvrir de façon cyclique et une conduite d'arrivée du milieu de combustion (21) pour acheminer le milieu de combustion à la chambre de combustion (20) fonctionnant en continu étant prévue entre les cylindres de compression (41,42) et la chambre de combustion (20), **caractérisé en ce qu'**un échappement (72) d'un premier cylindre de compression (41) des deux cylindres de compression (41,42) est relié à une admission (73) d'un deuxième cylindre de compression (42) des deux cylindres de compression (41,42).

2. Moteur à pistons axiaux (10) selon la revendication 1, **caractérisé en ce qu'**une admission (71) du premier cylindre de compression (41) est reliée à une admission du milieu de combustion (75) et un échappement (74) du deuxième cylindre de compression (42) à la conduite d'arrivée du milieu de combustion (21).

3. Moteur à pistons axiaux (10) selon la revendication 1 ou 2, **caractérisé en ce que** le deuxième cylindre de compression (42) comporte une surface cylindrique ou les deuxièmes cylindres de compression (42) comportent au total une surface cylindrique, qui correspond à la racine du rapport de compression multipliée par une surface du premier cylindre de compression (41) ou des premiers cylindres de compression (41).

4. Moteur à pistons axiaux (10) selon l'une quelconque des revendications 1 à 3, **caractérisé en ce que** le diamètre du premier cylindre de compression (41) est inférieur à 90%, de préférence 85%, notamment 83%, du diamètre d'un des cylindres de travail (30).

5. Moteur à pistons axiaux (10) selon l'une quelconque des revendications 1 à 4, **caractérisé en ce que** le premier cylindre de compression (41) est dimensionné ou les premiers cylindres de compression (41) sont dimensionnés de telle sorte que du milieu de combustion suffisamment comprimé est préparé par le ou les cylindres de compression (41) pour un ralenti du moteur à pistons axiaux (10).

6. Moteur à pistons axiaux (10) selon l'une quelconque des revendications 1 à 5, **caractérisé en ce que** le distributeur rotatif (27) est un fond de chambre de combustion (28).

7. Moteur à pistons axiaux (10) selon l'une quelconque des revendications 1 à 6, **caractérisé en ce qu'**un distributeur rotatif (27) comporte au moins deux ouvertures de distribution (29), qui ouvrent et/ou ferment les liaisons d'admission (25) de façon cyclique et/ou sont passées cycliquement sur les canaux d'admission (26) ou passées à travers les canaux d'admission (26).

8. Moteur à pistons axiaux (10) selon l'une quelconque des revendications 1 à 7, **caractérisé en ce que** les pistons de travail (35) passent dans les cylindres de travail (30), qui agissent sur une came sectorielle (62) d'une portance négative (60), laquelle contraint deux courses par rotation.

9. Moteur à pistons axiaux (10) selon l'une quelconque des revendications 1 à 8, **caractérisé en ce que** plusieurs premiers cylindres de compression (41) sont prévus avec respectivement un échappement (72) et/ou plusieurs deuxièmes cylindres de compression (42) sont prévus avec respectivement une admission (73), chacun des échappements (72) étant relié avec exactement une des admissions (73) ou un échappement (72) étant relié avec plusieurs admissions (72) et/ou une admission (73) avec plusieurs échappements (72).

10. Moteur à pistons axiaux (10) selon l'une quelconque des revendications 1 à 9, **caractérisé en ce qu'**un accumulateur intermédiaire (48) et/ou un refroidisseur intermédiaire (49) est prévu entre l'échappement (72) du premier cylindre de compression (41) et l'admission (73) du deuxième cylindre de compression (42).

11. Procédé de fonctionnement d'un moteur à pistons axiaux (10) avec combustion interne continue selon la revendication 1, pour lequel le milieu de combustion comprimé est brûlé en milieu de travail en commun avec le carburant dans une chambre de combustion (20) fonctionnant en continu, le milieu de travail est acheminé cycliquement aux cylindres de travail (30) pour obtenir de l'énergie mécanique et l'énergie mécanique obtenue dans les cylindres de travail (30) est également utilisée pour une compression du milieu de combustion, **caractérisé en ce que** la compression a lieu en deux phases.

12. Procédé de fonctionnement selon la revendication 11, **caractérisé en ce que** la chambre de combustion (20) comporte simultanément au moins deux liaisons d'admission ouvertes (25) par rapport respectivement à un cylindre de travail (30).

13. Procédé de fonctionnement selon l'une quelconque des revendications 11 à 12, **caractérisé en ce qu'**un refroidissement intermédiaire a lieu entre les deux phases.

14. Procédé de fonctionnement selon l'une quelconque des revendications 11 à 13, **caractérisé en ce que** la compression aux températures de fin de compression a lieu en dessous de 280°C, de préférence en dessous de 270°C.

15. Procédé de fonctionnement selon l'une quelconque des revendications 11 à 14, **caractérisé en ce que** dans la première phase, le milieu de combustion suffisamment comprimé est préparé pour le ralenti du moteur à pistons axiaux (10).
